# EUROPEAN PATENT APPLICATION

(11) **EP 2 706 649 A1**
(43) Date of publication of application: **12.03.2014**
(21) Application number: 12183789.2
(22) Date of filing: 11.09.2012
(51) Int. Cl.: H02K 3/493

(54) **A slot-wedge for an electrical machine**

(71) Applicant: Visedo Oy, 53850 Lappeenranta (FI)
(72) Inventor: Naumanen, Ville, 54410 Lappeenranta (FI); Huppunen, Jussi, 53850 Lappeenranta (FI)
(74) Representative: Väänänen, Janne Kalervo

(57) **Abstract**

A slot-wedge (101) for an electrical machine comprises magnetically amplifying material (105) whose relative permeability is greater than one. The slot-wedge comprises longitudinal side regions (102, 103) having surfaces for leaning on adjacent teeth of the electrical machine and a longitudinal middle region (104) between the side regions. The slot-wedge is shaped so that there is less magnetically amplifying material on the middle region of the slot-wedge than on the side regions so as to reduce leakage inductance caused by the slot-wedge when being installed in the electrical machine. The slot-wedge provides advantages of mushroom-shaped stator and/or rotor teeth also in a case where the stator and/or rotor teeth have substantially straight flanks (115, 116) so as to facilitate installation of coil sides of windings in the slots of the stator and/or rotor.

## Description

### Field of the invention

The invention relates generally to rotating electrical machines. More particularly, the invention relates to a slot-wedge of an electrical machine. Furthermore, the invention relates to an electrical machine for e.g. a mobile working machine. Furthermore, the invention relates to a mobile working machine.

### Background

Rotating electrical machines, such as motors and generators, generally comprise a rotor and a stator which are arranged such that a magnetic flux is developed between these two. Typically at least one of the stator and the rotor comprises windings whose coil sides are located in slots of a ferromagnetic core structure of the stator or the rotor. There is an inherent trade-off when designing the slots of the ferromagnetic core structure. On the one hand, the slots should be as narrow as possible in the circumferential direction of the electrical machine in order to avoid too strong increase in the reluctance on the path of the magnetic flux developed between the stator and the rotor. On the other hand, the slots should not be too narrow in the circumferential direction in order to have a sufficient room for the windings because the cross-sectional area of the slots cannot be freely increased by increasing the slot-height in the radial direction because excessively high slots would have too much leakage inductance. Furthermore, the slots cause spatial variation in the reluctance seen by the magnetic flux developed between the stator and the rotor, and thereby the slots cause pulsations in the magnetic flux distribution on the air-gap surfaces of the rotor and the stator. These pulsations of the magnetic flux distribution cause losses and thus they should be minimized.

A traditional way to reduce the pulsations of the magnetic flux distribution and the reluctance seen by the magnetic flux developed between the stator and the rotor is to use mushroom shaped teeth where the tips of the teeth are wider in the circumferential direction than the stem parts of the teeth. An inherent drawback of the mushroom shaped teeth is that they complicate the installation of coil sides of windings into the slots because the openings of the slots are narrower in the circumferential direction than the other areas of the slots. Thus, mushroom shaped teeth are usually suitable for only round-wire windings but not for profile-wire windings. Another traditional way to reduce the pulsations of the magnetic flux distribution and the reluctance seen by the magnetic flux developed between the stator and the rotor is to use slot-wedges made of magnetically amplifying material whose relative permeability is greater than one, i.e. µᵣ > 1. An inherent drawback of the slot-wedges made of magnetically amplifying material is that they increase the leakage inductance because they provide low-reluctance paths for leakage flux components.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new slot-wedge for an electrical machine. The slot-wedge according to the invention comprises:
- magnetically amplifying material whose relative permeability is greater than one, i.e. µᵣ > 1,
- longitudinal side regions having surfaces for leaning on adjacent teeth of the electrical machine, and
- a longitudinal middle region between the side regions,
wherein there is less magnetically amplifying material on the middle region of the slot-wedge than on the side regions of the-slot wedge so as to reduce leakage inductance caused by the slot-wedge when being installed in the electrical machine.

The above-described slot-wedge makes it possible to achieve at least a part of advantages of mushroom-shaped stator and/or rotor teeth also in a case where the stator and/or rotor teeth have substantially straight flanks, i.e. the tips of the teeth are not provided with a widening.

In accordance with the invention, there is provided also a new electrical machine for a mobile working machine. The electrical machine comprises a first part and a second part, wherein
- the first and second parts are rotatably supported to each other and one of the first and second parts is the rotor of the electrical machine and the other of the first and second parts is the stator of the electrical machine,
- at least one of the first and second parts comprises a core structure provided with slots and windings whose coil sides are located in the slots, and
- the slots are closed with slot-wedges according to the invention.

In accordance with the third aspect of the invention, there is provided a new mobile working machine. The mobile working machine comprises:
- a combustion engine, and
- an electromechanical power transmission chain between the combustion engine and one or more wheels, chain tracks, or other actuators of the mobile working machine,
wherein the electromechanical transmission chain comprises at least one electrical machine according to the present invention.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

A number of non-limiting exemplifying embodiments of the invention are described in accompanied dependent claims.

Various non-limiting exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of unrecited features. The features recited in depending claims are mutually freely combinable unless otherwise explicitly stated.

### Brief description of figures

The exemplifying embodiments of the invention and their advantages are explained in greater detail below in the sense of examples and with reference to the accompanying drawings, in which:
figure 1 shows a section view of a slot-wedge according to an exemplifying embodiment of the invention and of a detail of an electrical machine, the section being taken along a plane perpendicular to the geometrical rotation axis of the rotor of the electrical machine,
figures 2a, 2b, and 2c illustrate a method for installing a slot-wedge according to an exemplifying embodiment of the invention to between teeth of a core structure,
figure 3 shows a section view of a slot-wedge according to an exemplifying embodiment of the invention and of a detail of an electrical machine, the section being taken along a plane perpendicular to the geometrical rotation axis of the rotor of the electrical machine,
figure 4 shows a section view of a slot-wedge according to an exemplifying embodiment of the invention and of a detail of an electrical machine, the section being taken along a plane perpendicular to the geometrical rotation axis of the rotor of the electrical machine,
figure 5 shows a section view of an electrical machine according to an exemplifying embodiment of the invention, the section being taken along a plane perpendicular to the geometrical rotation axis of the rotor of the electrical machine, and
figure 6 shows an illustration of a mobile working machine according to an exemplifying embodiment of the invention.

### Description of exemplifying embodiments

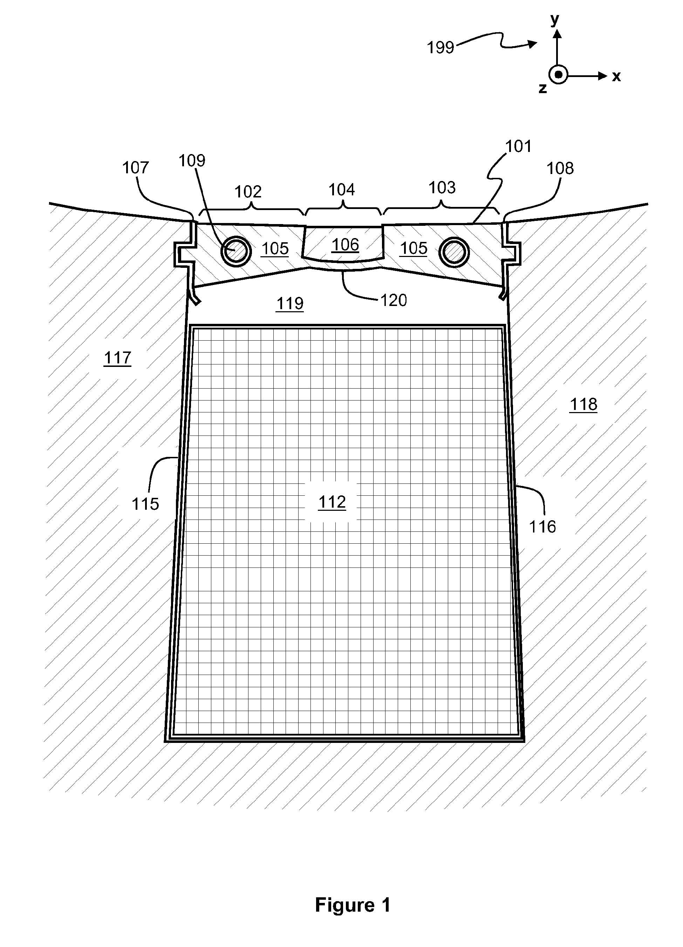

Figure 1 shows a section view of a slot-wedge 101 according to an exemplifying embodiment of the invention and of a detail of an electrical machine. The detail of the electrical machine illustrated in figure 1 comprises parts of adjacent teeth 117 and 118 of a core structure of the electrical machine, and coil sides 112 located in the slot 119 between the teeth 117 and 118. The slot-wedge 101 is located between the adjacent teeth 117 and 118 and closes the slot opening of the slot 119. The section shown in figure 1 is taken along a plane perpendicular to a geometrical rotation axis of the rotor of the electrical machine, i.e. the section is taken along the xy-plane of a coordinate system 199. The geometrical rotation axis is parallel to the z-axis of the coordinate system 199.

The slot-wedge 101 comprises magnetically amplifying material 105 whose relative permeability is greater than one, i.e. µᵣ > 1. The slot-wedge comprises longitudinal side regions 102 and 103 which have surfaces for leaning on the adjacent teeth 117 and 118. In a case of non-skewed slots, the longitudinal direction is parallel to the geometrical rotation axis of the rotor, i.e. parallel to the z-axis of the coordinate system 199. The slot-wedge comprises a longitudinal middle region 104 that is between the side regions 102 and 103 in the circumferential direction of the electrical machine, the circumferential direction being the direction of movement of the air-gap surface of the rotor when the rotor is rotating. As illustrated in figure 1, there is less magnetically amplifying material on the middle region 104 than on the side regions 102 and 103 so as to reduce leakage inductance caused by the slot-wedge 101. In the exemplifying case illustrated in figure 1, the magnetically amplifying material 105 is shaped to comprise a longitudinal groove on the middle region 104 so that the middle region 104 constitutes an isthmus 120 between the side regions 102 and 103. The isthmus 120 is preferably dimensioned so that it gets magnetically saturated and thus the leakage flux via the slot-wedge 110 and across the slot opening gets limited. Therefore, the slot-wedge 101 makes it possible to achieve advantages of mushroom-shaped teeth also in the case shown in figure 1 where the teeth 117 and 118 have substantially straight flanks 115 and 116 so as to facilitate the installation of the coil side 112 into the slot 119. It is also possible that the magnetically amplifying material 105 is shaped to comprise two or more parallel longitudinal grooves on the middle region 104. Furthermore, it is possible to have longitudinal grooves on both sides of the slot-wedge, i.e. on the side facing towards the air-gap and also on the side facing towards the slot 119.

In a slot-wedge according to an exemplifying embodiment of the invention, the magnetically amplifying material 105 comprises a stack of electrically insulated ferromagnetic steel sheets stacked in the longitudinal direction of the slot-wedge. The stack of the ferromagnetic steel sheets may comprise one or more longitudinal holes and the slot-wedge may further comprise a longitudinal binding rod 109 in each of the one or more longitudinal holes. The binding rod 109 can be made of electrically insulating material such as e.g. fiberglass enforced plastic, or the binding rod 109 can be made of steel and there can be an electrically insulating bush between the bonding rod and the stack of the ferromagnetic steel sheets. In a slot-wedge according to an exemplifying embodiment of the invention, there is glue between adjacent ones of the ferromagnetic steel sheets.

A slot-wedge according to an exemplifying embodiment of the invention comprises layers 107 and 108 of electrically insulating material on the surfaces for leaning on the adjacent teeth 117 and 118 of the electrical machine. The electrically insulating layers 107 and 108 are capable of preventing the slot-wedge 101 from providing galvanic contacts between ferromagnetic steel sheets of the core structure comprising the teeth 117 and 118.

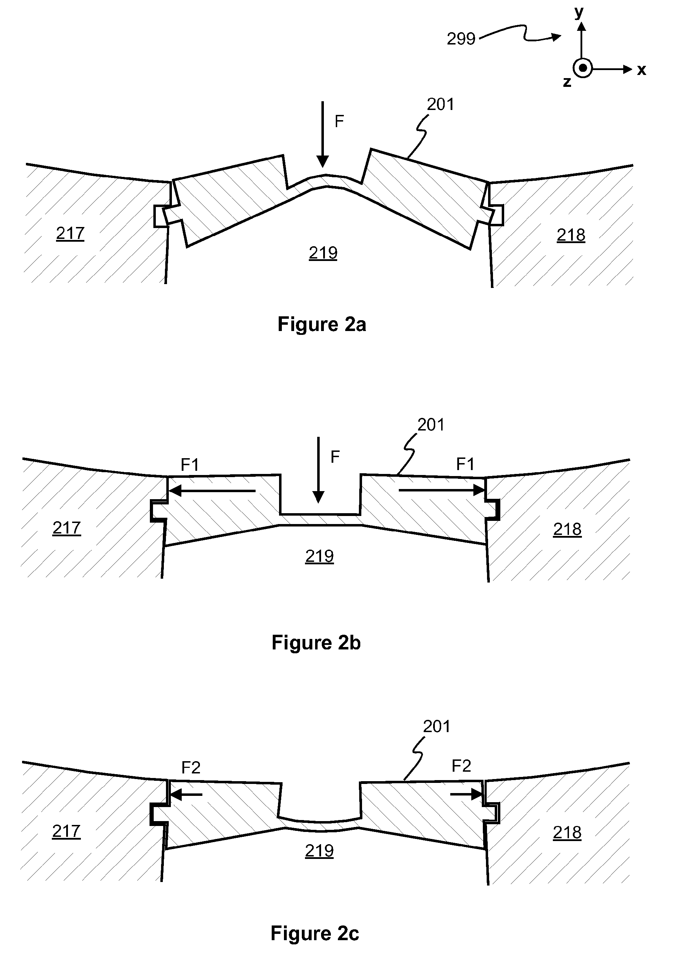

In a slot-wedge according to an exemplifying embodiment of the invention, the middle region 104 is flexible so that the slot-wedge is bendable along the middle region so as to facilitate installation of the slot-wedge to between the adjacent teeth 117 and 118 of the electrical machine. Installation of a slot-wedge of the kind described above is illustrated in section views shown by figures 2a, 2b, and 2c. The sections shown in figures 2a-2c are taken along a plane perpendicular to a geometrical rotation axis of a rotor of an electrical machine, i.e. the section is taken along the xy-plane of a coordinate system 299. In the situation shown in figure 2a, the slot-wedge 201 has been bent along the middle region so that the slot-wedge can be placed to between adjacent teeth 217 and 218 of a core structure. In the situation shown in figure 2b, the slot-wedge 201 has been bent towards the bottom of a slot 219 by pressing the middle region of the slot-wedge with a force F illustrated in figures 2a and 2b. In the situation shown in figure 2c, the slot-wedge 201 has been bent further towards the bottom of the slot 219. Forces F1 that are directed by the slot-wedge 201 to the adjacent teeth 217 and 218 in the situation shown in figure 2b are greater than the corresponding forces F2 in the situation shown in figure 2c. Therefore, in the situation shown in figure 2c, bending the slot-wedge 201 back away from the bottom of the slot 219 would cause an increase in the forces directed by the slot-wedge to the adjacent teeth 217 and 219. This potential increase in the forces keeps the slot-wedge 201 locked in its position shown in figure 2c.

A slot-wedge according to an exemplifying embodiment of the invention comprises magnetically non-amplifying material 106 arranged to mechanically support the magnetically amplifying material, the relative permeability of the magnetically non-amplifying material being one or below, i.e. µᵣ ≤ 1. In the exemplifying case illustrated in figure 1, the magnetically non-amplifying material 106 is located in a groove of the slot wedge and the magnetically non-amplifying material makes the middle region 104 of the slow-wedge more rigid.

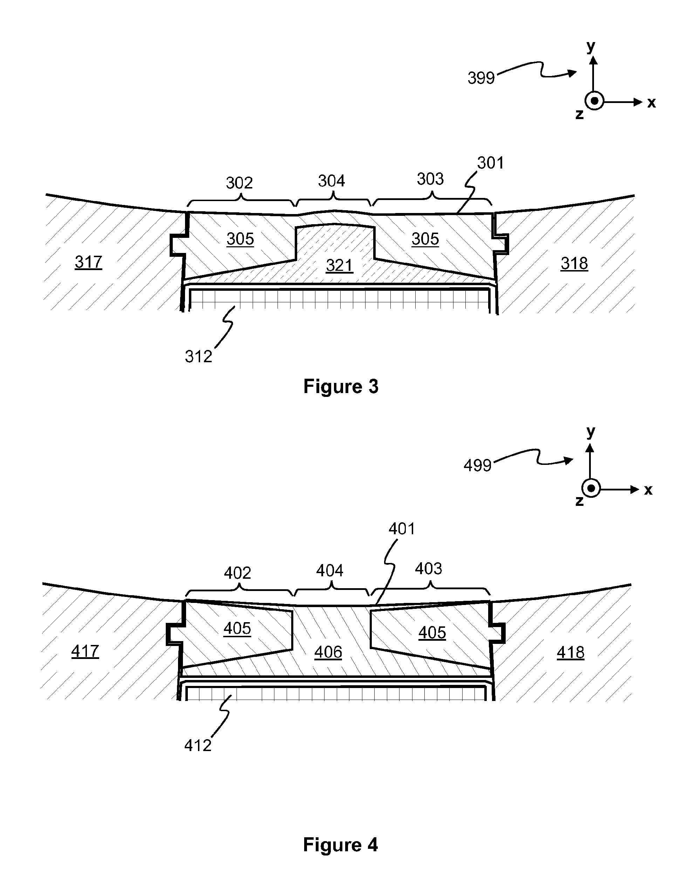

Figure 3 shows a section view of a slot-wedge 301 according to an exemplifying embodiment of the invention and of a detail of an electrical machine. The detail of the electrical machine illustrated in figure 3 comprises parts of adjacent teeth 317 and 318 of a core structure of the electrical machine, and a part of coil sides 312 located in the slot between the teeth 317 and 318. The slot-wedge 301 is located between the adjacent teeth 317 and 318 and closes the slot opening of the slot.

The section shown in figure 3 is taken along a plane perpendicular to a geometrical rotation axis of a rotor of the electrical machine, i.e. the section is taken along the xy-plane of a coordinate system 399. The slot-wedge 301 comprises magnetically amplifying material 305. The slot-wedge comprises longitudinal side regions 302 and 303 which have surfaces for leaning on the adjacent teeth 317 and 318. The slot-wedge 301 comprises a longitudinal middle region 304 that is between the side regions 302 and 303 in the circumferential direction of the electrical machine. As illustrated in figure 3, there is less magnetically amplifying material on the middle region 304 than on the side regions 302 and 303 so as to reduce leakage inductance caused by the slot-wedge 301 when being installed in the electrical machine. In the exemplifying case illustrated in figure 3, the magnetically amplifying material 305 is shaped to comprise a longitudinal groove on the middle region 304. The groove is located on the side of the slot-wedge that faces towards the slot. In the exemplifying case illustrated in figure 3, the groove is filled with magnetically non-amplifying material, e.g. resin, which prevents the slot-wedge from being bent along the middle region 304 and thus makes the slot-wedge stiff.

Figure 4 shows a section view of a slot-wedge 401 according to an exemplifying embodiment of the invention and of a detail of an electrical machine. The detail of the electrical machine illustrated in figure 4 comprises parts of adjacent teeth 417 and 418 of a core structure of the electrical machine, and coil sides 412 located in the slot between the teeth 417 and 418. The slot-wedge 401 is located between the adjacent teeth 417 and 418 and closes the slot opening of the slot. The section shown in figure 4 is taken along a plane perpendicular to a geometrical rotation axis of a rotor of the electrical machine, i.e. the section is taken along the xy-plane of a coordinate system 499. The slot-wedge 401 comprises magnetically amplifying material 405. Furthermore, the slot-wedge comprises magnetically non-amplifying material 406 arranged to mechanically support the magnetically amplifying material. The relative permeability of the magnetically non-amplifying material is preferably one or below, i.e. µᵣ ≤ 1. The slot-wedge comprises longitudinal side regions 402 and 403 which have surfaces for leaning on the adjacent teeth 417 and 418. The slot-wedge 401 comprises a longitudinal middle region 404 that is between the side regions 402 and 403 in the circumferential direction of the electrical machine. As illustrated in figure 4, the middle region 404 comprises the magnetically non-amplifying material 406 and is free from the magnetically amplifying material so as to reduce the leakage inductance caused by the slot-wedge when being installed in the electrical machine. The magnetically amplifying material may comprise, for example, stacks of electrically insulated ferromagnetic steel sheets stacked in the longitudinal direction of the slot-wedge, or the magnetically amplifying material can be ferrite. The magnetically non-amplifying material 406 can be, for example, resin that is arranged to bind the separate pieces of the magnetically material 405 together as illustrated in figure 4. The pieces of the magnetically material may comprise cavities and/or projections so as to strengthen the joint between the magnetically amplifying material and the magnetically non-amplifying material. The slot-wedge 401 can be installed in an electrical machine by pushing the slot-wedge in the longitudinal direction of the slot.

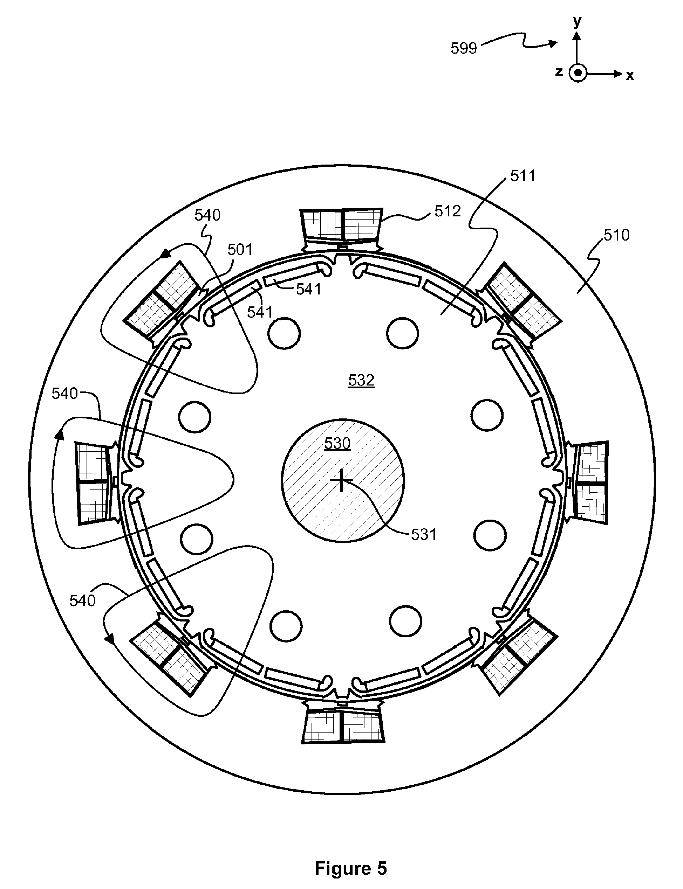

Figure 5 shows a section view of an electrical machine according to an exemplifying embodiment of the invention. The electrical machine comprises a first part 510 and a second part 511 that are rotatably supported to each other. In the exemplifying case illustrated in figure 5, the electrical machine is an inner rotor machine where the first part 510 that surrounds the second part 511 is the stator of the electrical machine and the second part 511 is the rotor of the electrical machine. It is also possible that an electrical machine according to an exemplifying embodiment of the invention is an outer rotor machine where the rotor surrounds the stator. In the exemplifying case illustrated in figure 5, the first part 510, i.e. the stator, comprises a core structure provided with slots and windings whose coil sides 512 are located in the slots. The teeth of the core structure have substantially straight flanks so as to facilitate installation of the coil sides of the windings into the slots of the core structure. The second part 511, i.e. the rotor, comprises a shaft 531, a core structure 532, and permanent magnets 541 embedded in the core structure. Closed lines 540 illustrate the magnetic fluxes generated by some of the permanent magnets of the rotor.

The slots of the stator are closed with slot-wedges 501 according to any of the above-described exemplifying embodiment of the invention. It is also possible that the rotor of an electrical machine according to an exemplifying embodiment of the invention comprises slots and windings whose coil sides are located in the slots of the rotor, and that the slots of the rotor are closed with slot-wedges according to any of the above-described exemplifying embodiment of the invention.

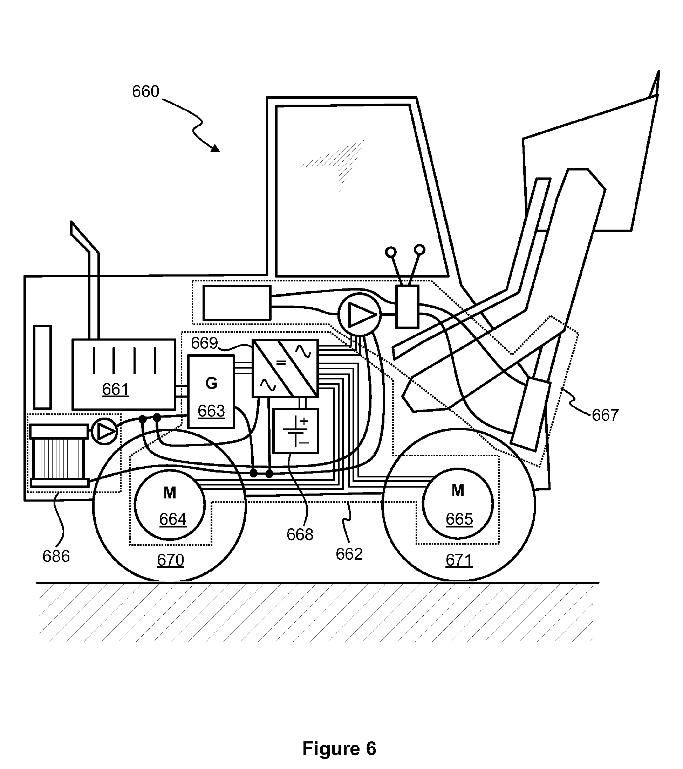

Figure 6 shows an illustration of a mobile working machine 660 according to an exemplifying embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 661 that can be e.g. a diesel engine, an Otto-cycle engine, or a turbine engine. The mobile working machine comprises an electromechanical power transmission chain 662 between the combustion engine and wheels 670, 671 of the mobile working machine. The electromechanical transmission chain comprises a generator 663 the rotor of which is connected to the shaft of the combustion engine. The electromechanical transmission chain comprises a frequency converter 669 and electrical motors 664, 665 at the hubs of the wheels of the mobile working machine. The frequency converter 669 is arranged to convert the electrical voltage produced by the generator 663 into electrical voltages having amplitudes and frequencies suitable for the electrical motors 664, 665. The frequency converter may have separate output stages for all the electrical motors 664, 665 in which case each electrical motor can be controlled individually, or all the electrical motors 664, 665 can be connected to one and the same output stage of the frequency converter in which case the electrical motors are controlled as a group. Each of the electrical motors 664, 665 is an electrical machine that comprises a first part and a second part, wherein:
- the first and second parts are rotatably supported to each other and one of the first and second parts is the rotor of the electrical machine and the other of the first and second parts is the stator of the electrical machine,
- at least one of the first and second parts comprises a core structure provided with slots and windings whose coil sides are located in the slots, and
- the slots are closed with slot-wedges according to any of the above-described exemplifying embodiment of the invention.

In a mobile working machine according to an embodiment of the invention, also the generator 663 is an electrical machine of the kind described above. It is also possible that only the generator 663 is an electrical machine of the kind described above, and the electrical motors 664, 665 are electrical machines of some other kind.

A mobile working machine according to an embodiment of the invention comprises a liquid cooling system 686 arranged to cool the electromechanical power transmission chain 662.

A mobile working machine according to an embodiment of the invention comprises a liquid cooling system arranged to cool both a hydraulic system 667 of the mobile working machine and the electromechanical power transmission chain 662.

A mobile working machine according to an embodiment of the invention comprises a liquid cooling system arranged to cool both the electromechanical power transmission chain 662 and the combustion engine 661.

In a mobile working machine according to an embodiment of the invention, the electromechanical power transmission chain comprises a battery 668 and/or an electric double-layer capacitor arranged to respond to peak power needs exceeding the maximum power of the combustion engine 661. The battery and/or the electric double-layer capacitor can be connected, for example, to a direct voltage intermediate circuit of the frequency converter 669. An electric double-layer capacitor is often called a "super capacitor".

The specific examples provided in the description given above should not be construed as limiting. Therefore, the invention is not limited merely to the exemplifying embodiments described above.

## Claims

1. A slot-wedge (101, 201, 301, 401, 501) for an electrical machine, the slot-wedge comprising:
- magnetically amplifying material (105, 305, 405) whose relative permeability is greater than one,
- longitudinal side regions (102, 103, 302, 303, 402, 403) having surfaces for leaning on adjacent teeth of the electrical machine, and
- a longitudinal middle region (104, 304, 404) between the side regions,
**characterized in that** there is less magnetically amplifying material on the middle region of the slot-wedge than on the side regions of the-slot wedge so as to reduce leakage inductance caused by the slot-wedge when being installed in the electrical machine.

2. A slot-wedge according to claim 1, wherein the slot-wedge further comprises magnetically non-amplifying material (106, 406) arranged to mechanically support the magnetically amplifying material, the relative permeability of the magnetically non-amplifying material being one or below.

3. A slot-wedge according to claim 1 or 2, wherein the magnetically amplifying material (105, 305) is shaped to comprise at least one longitudinal groove on the middle region so as to reduce the leakage inductance caused by the slot-wedge when being installed in the electrical machine.

4. A slot-wedge according to claim 2, wherein the middle region (404) is free from the magnetically amplifying material so as to reduce the leakage inductance caused by the slot-wedge when being installed in the electrical machine, the middle region comprising the magnetically non-amplifying material (406).

5. A slot-wedge according to claim 1-5, wherein the middle region (104, 304) is flexible so that the slot-wedge is bendable along the middle region so as to facilitate installation of the slot-wedge to between the adjacent teeth of the electrical machine.

6. A slot-wedge according to any of claims 1-5, wherein the slot-wedge comprises layers (107, 108) of electrically insulating material on the surfaces for leaning on the adjacent teeth of the electrical machine.

7. A slot-wedge according to any of claims 1-6, wherein the magnetically amplifying material comprises a stack of ferromagnetic steel sheets stacked in the longitudinal direction of the slot-wedge.

8. A slot-wedge according to claim 7, wherein the stack of the ferromagnetic steel sheets comprise one or more longitudinal holes, and the slot-wedge further comprises a longitudinal binding rod (109) in each of the one or more longitudinal holes.

9. A slot-wedge according to claim 7 or 8, wherein there is glue between adjacent ones of the ferromagnetic steel sheets.

10. An electrical machine comprising a first part (510) and a second part (511), wherein
- the first and second parts are rotatably supported to each other and one of the first and second parts is a rotor of the electrical machine and the other of the first and second parts is a stator of the electrical machine,
- at least one of the first and second parts comprises a core structure provided with slots and windings whose coil sides (512) are located in the slots, and
- the slots are closed with slot-wedges (501) according to any of claims 1-9.

11. An electrical machine according to claim 10, wherein teeth of the core structure have substantially straight flanks so as to facilitate installation of the coil sides of the windings in the slots of the core structure.

12. An electrical machine according to claim 10 or 11, wherein the longitudinal middle region of each slot-wedge is flexible so that the slot-wedge is bendable along the middle region so as to facilitate installation of the slot-wedge to between adjacent teeth of the core structure.

13. An electrical machine according to claim 12, wherein each slot-wedge has been bent towards the bottom of a respective slot of the core structure, bending the slot-wedge back away from the bottom of the respective slot causing an increase in forces directed by the slot-wedge to the adjacent teeth of the core structure, and the increase in the forces keeping the slot-wedge locked in its position between the adjacent teeth of the core structure.

14. A mobile working machine (660) comprising:
- a combustion engine (661), and
- an electromechanical power transmission chain (662) between the combustion engine and one or more actuators (670, 671) of the mobile working machine,
wherein the electromechanical transmission chain comprises at least one electrical machine (663-665) according to any of claims 10-13.

15. A mobile working machine according to claim 14, wherein the mobile working machine comprises a liquid cooling system (686) arranged to cool the electromechanical power transmission chain and a hydraulic system (667) of the mobile working machine.
